# FASCICULE DE BREVET EUROPEEN

(11) **EP 4 601 890 B1**
(45) Date de publication et mention de la délivrance du brevet: **09.09.2026**
(21) Numéro de dépôt: 23783444.5
(22) Date de dépôt: 05.10.2023
(51) Int. Cl.: B60H 1/00, B60H 1/32, F25B 41/40, F25B 5/02, F25B 41/42

(54) **MODULE DE DISTRIBUTION DE FLUIDE RÉFRIGÉRANT**
KÄLTEMITTELVERTEILUNGSMODUL
REFRIGERANT DISTRIBUTION MODULE

(30) Priorité: 13.10.2022 FR 2210540
(43) Date de publication de la demande: 20.08.2025
(73) Titulaire: Valeo Electrification, 95892 Cergy Pontoise (FR)
(72) Inventeur: PERNET, Stephane, 78320 Le Mesnil-Saint-Denis (FR); EL-CHAMMAS, Rody, 78320 Le Mesnil-Saint-Denis (FR); GARDIE, Patricia, 78320 Le Mesnil-Saint-Denis (FR)
(74) Mandataire: Valeo Powertrain Systems
(86) Numéro de dépôt international: PCT/EP2023/077528
(87) Numéro de publication internationale: WO 2024/078954

(56) Documents cités:
- CN-A- 111 976 416
- CN-A- 114 750 569
- CN-B- 113 199 923
- DE-U1- 202021 104 430

## Description

### Domaine technique

La présente invention se rapporte au domaine des systèmes de conditionnement thermique. De tels systèmes de conditionnement thermique peuvent notamment équiper un véhicule automobile. Ces systèmes permettent de réaliser une régulation thermique de différents organes du véhicule, tel que l'habitacle ou une batterie de stockage d'énergie électrique dans le cas d'un véhicule à propulsion électrique. Les échanges de chaleur sont gérés principalement par la compression et la détente d'un fluide réfrigérant au sein de plusieurs échangeurs de chaleur faisant partie d'un circuit fermé de circulation.

### Technique antérieure

Les systèmes de conditionnement thermiques, comme celui connu du document CN 111 976 416 A, comportent généralement un nombre élevé d'échangeurs de chaleur et d'actionneurs permettant de gérer le débit et la pression de fluide réfrigérant circulant dans les différents échangeurs de chaleur.

Un grand nombre de composants, tels que des vannes d'arrêts, des dispositifs de détentes, ainsi que les différents échangeurs de chaleur, doivent ainsi être reliés les unes aux autres par un ensemble de canalisations dans lesquelles circule le fluide réfrigérant. Il est ainsi fréquent d'avoir à assembler un grand nombre de canalisations de circulation du fluide réfrigérant. L'espace disponible pour recevoir ces différents composants étant limité, l'intégration de l'ensemble des composants peut être problématique. De plus, le montage des différents composants et organes peut être délicat, en raison de la difficulté à faire passer les outils, et la vérification de la conformité du montage réalisé peut être longue. Additionnellement, lorsqu'un cheminement tortueux des canalisations dans lesquelles circule le fluide réfrigérant doit être réalisé, les performances thermodynamiques ont tendance à se dégrader.

Pour au moins ces raisons, il est souhaitable de disposer de systèmes de conditionnement thermique plus faciles à intégrer dans un espace restreint, et peu couteux à fabriquer.

### Résumé

Pour cela, la présente invention, telle que définie dans la revendication 1, propose un module de distribution de fluide réfrigérant comportant :
- un premier canal de circulation de fluide réfrigérant, reliant une première entrée de fluide réfrigérant et une première sortie de fluide réfrigérant,
- un deuxième canal de circulation reliant une deuxième entrée et une deuxième sortie,
- un troisième canal de circulation reliant une première zone de connexion disposée sur le premier canal et une troisième sortie,
- un quatrième canal de circulation reliant une troisième entrée et une deuxième zone de connexion disposée sur le deuxième canal entre la deuxième entre la deuxième entrée et la deuxième sortie,
- un cinquième canal de circulation reliant une quatrième entrée et une troisième zone de connexion disposée sur le deuxième canal entre la deuxième zone de connexion et la deuxième sortie,
- un sixième canal de circulation reliant une quatrième zone de connexion disposée sur le cinquième canal et une cinquième zone de connexion disposée sur le premier canal entre la première entrée et la première zone de connexion,

le sixième canal comprenant une vanne unidirectionnelle configurée pour autoriser une circulation de fluide réfrigérant de la quatrième zone de connexion vers la cinquième zone de connexion et configurée pour interdire une circulation de fluide réfrigérant de la cinquième zone de connexion vers la quatrième zone de connexion,
dans lequel chaque canal de circulation de fluide réfrigérant est formé par un évidement interne d'un même bloc élémentaire.

Les canaux de circulation de fluide réfrigérant sont ainsi intégrés à l'intérieur de la structure du module de distribution de fluide réfrigérant. Le module ne comporte pas de tuyaux ou durites saillantes. L'ensemble des canaux permettant de réalisation la distribution de fluide réfrigérant, c'est-à-dire l'alimentation en fluide réfrigérant de plusieurs échangeurs de chaleur, ainsi que la collecte du fluide réfrigérant sortant de ces échangeurs, peut ainsi être réalisée grâce à une pièce unique. L'intégration des différents éléments est facilitée, et la complexité réduite.

Les caractéristiques listées dans les paragraphes suivants peuvent être mises en œuvre indépendamment les unes des autres ou selon toutes les combinaisons techniquement possibles :
Le module de distribution de fluide réfrigérant peut alimenter un système de conditionnement thermique, par exemple un système de conditionnement thermique pour véhicule automobile.

Selon un mode de réalisation, le module de distribution de fluide réfrigérant comporte un septième canal de circulation reliant une quatrième sortie et une sixième zone de connexion disposée sur le premier canal entre la cinquième zone de connexion et la première entrée.

L'alimentation en fluide réfrigérant d'un échangeur de chaleur supplémentaire est ainsi possible, ce qui permet d'augmenter les fonctionnalités possibles du module de distribution de fluide réfrigérant.

Les canaux de circulation de fluide possèdent une section transversale circulaire.

Les canaux peuvent ainsi être réalisés par des usinages simples de type perçage.

Selon un aspect du module de distribution de fluide réfrigérant, le premier canal comprend un premier détendeur disposé entre la première zone de connexion et la première sortie.

Le module de distribution de fluide réfrigérant peut ainsi alimenter un premier échangeur de chaleur fonctionnant en évaporateur.

Selon un aspect du module de distribution de fluide réfrigérant, le troisième canal comprend un deuxième détendeur.

Le module de distribution de fluide réfrigérant peut ainsi alimenter également un deuxième échangeur fonctionnant en évaporateur.

Le premier détendeur peut être un détendeur électronique. De même, le deuxième détendeur peut être un détendeur électronique.

Selon un aspect du module de distribution de fluide réfrigérant, le premier canal comprend une première vanne d'arrêt disposée entre la première entrée et la cinquième zone de connexion.

La première vanne d'arrêt est une vanne à commande électrique.

La deuxième vanne d'arrêt est une vanne à commande électrique.

Selon le mode de réalisation dans lequel le module comprend une quatrième sortie, la première vanne d'arrêt est disposée entre la cinquième zone de connexion et la sixième zone de connexion.

Le cinquième canal comprend une deuxième vanne d'arrêt disposée entre la quatrième zone de connexion et la troisième zone de connexion.

Les deux vannes d'arrêts permettent d'interrompre la circulation du fluide réfrigérant de façon à permettre différents modes de fonctionnement.

La vanne unidirectionnelle est une vanne passive.

La vanne unidirectionnelle est par exemple un clapet anti-retour.

Selon un exemple de réalisation du module de distribution e fluide réfrigérant, le bloc élémentaire a sensiblement la forme d'un parallélépipède rectangle.

Cette forme permet d'intégrer facilement divers composants comme des détendeurs et des vannes d'arrêt, tout en optimisant la compacité.

Le bloc élémentaire peut être en aluminium.

Le bloc élémentaire peut ainsi avoir un poids modéré et un cout de fabrication faible.

Selon un aspect du module de distribution de fluide réfrigérant, les canaux de circulation de fluide réfrigérant sont formés par une succession de portions cylindriques rectilignes en communication fluidique les unes avec les autres.

Les canaux de circulation peuvent ainsi être obtenus par des usinages simples de type perçage. Le cout de fabrication du module de distribution de fluide réfrigérant peut ainsi être diminué.

Selon un exemple de réalisation du module de distribution de fluide réfrigérant, chaque canal de circulation de fluide réfrigérant est formé par une succession de portions cylindriques coaxiales ou s'étendant selon des axes sécants.

Par exemple, chaque canal de circulation de fluide réfrigérant est formé par une succession de portions cylindriques coaxiales ou s'étendant selon des axes perpendiculaires.

Le premier canal du bloc élémentaire comprend un premier logement de réception du premier détendeur.

Le premier logement est cylindrique et s'étend selon un axe.

Le premier canal débouche dans le premier logement, l'axe du premier logement étant non concourant avec l'axe du premier canal.

Le premier détendeur comprend une entrée radiale de fluide réfrigérant et une sortie axiale de fluide réfrigérant.

Le deuxième détendeur comprend une entrée radiale de fluide réfrigérant et une sortie axiale de fluide réfrigérant.

Le premier détendeur et le deuxième détendeur peuvent être identiques.

La première vanne d'arrêt comprend une entrée radiale de fluide réfrigérant et une sortie axiale de fluide réfrigérant.

La deuxième vanne d'arrêt comprend une entrée radiale de fluide réfrigérant et une sortie axiale de fluide réfrigérant.

La première vanne d'arrêt et la deuxième vanne d'arrêt peuvent être identiques.

Le troisième canal du bloc élémentaire comprend un deuxième logement de réception du deuxième détendeur.

Le premier canal du bloc élémentaire comprend un troisième logement de réception de la première vanne d'arrêt.

Le cinquième canal du bloc élémentaire comprend un quatrième logement de réception de la deuxième vanne d'arrêt.

Selon un exemple de réalisation du module de distribution de fluide réfrigérant, la deuxième entrée et la deuxième sortie sont disposées sur une première face du bloc élémentaire.

La première face est plane.

Selon un exemple de réalisation du module de distribution de fluide réfrigérant, la troisième entrée et la troisième sortie sont disposées sur une deuxième face du bloc élémentaire.

La deuxième face est plane.

Selon un exemple de réalisation du module de distribution de fluide réfrigérant, la première sortie est disposée sur une troisième face du bloc élémentaire.

La première face, la deuxième face et la troisième face sont perpendiculaires deux à deux.

Le logement de réception du premier détendeur et le logement de réception du deuxième détendeur débouchent sur une même face du bloc élémentaire.

Les détendeurs sont ainsi regroupés.

Par exemple, le logement de réception du premier détendeur et le logement de réception du deuxième détendeur débouchent sur la première face du bloc élémentaire.

Une même face du bloc élémentaire reçoit plusieurs éléments, ce qui facilite le montage.

Selon un exemple de réalisation, la première entrée et la quatrième sortie sont disposées sur la première face du bloc élémentaire.

Selon un mode de réalisation du module de distribution de fluide réfrigérant, le deuxième canal comprend un capteur de pression de fluide réfrigérant disposé entre la deuxième zone de connexion et la troisième zone de connexion.

Le deuxième canal peut aussi comprendre un capteur de température de fluide réfrigérant disposé entre la troisième zone de connexion et la deuxième sortie.

Ces deux capteurs fournissent des informations sur l'état thermodynamique du fluide réfrigérant, permettant une régulation des systèmes de conditionnement thermiques intégrant le module de distribution de fluide réfrigérant.

Selon un exemple de mise en œuvre du module de distribution de fluide réfrigérant, le capteur de pression de fluide réfrigérant et le capteur de température de fluide réfrigérant sont disposés sur une quatrième face du bloc élémentaire, opposée à la troisième face.

Selon un mode de réalisation, le module de distribution de fluide réfrigérant comprend une bride d'interface avec un premier échangeur de chaleur. La bride d'interface comporte :
- un premier canal de transfert reliant la troisième sortie du module à une entrée de fluide réfrigérant du premier échangeur de chaleur,
- un deuxième canal de transfert reliant une sortie du premier échangeur de chaleur et la troisième entrée du module,
la bride d'interface étant solidaire du bloc élémentaire et du premier échangeur de chaleur.

La bride d'interface permet d'ajuster la position relative du premier échangeur de chaleur et du module de distribution de fluide réfrigérant.

La bride d'interface comprend une portion plane et deux embouts de connexion au bloc élémentaire, les embouts s'étendant transversalement à la portion plane.

Selon un exemple de réalisation, le premier canal de transfert comprend une rainure rectiligne s'étendant selon un axe parallèle au plan d'extension de la portion plane.

Le deuxième canal de transfert est perpendiculaire au plan d'extension de la portion plane.

La bride d'interface possède une forme générale de triangle rectangle.

Selon un exemple de réalisation, la rainure rectiligne du premier canal de transfert est parallèle à l'hypoténuse du triangle rectangle.

La bride d'interface est en appui sur une face du bloc élémentaire.

La bride d'interface peut être brasée au premier échangeur de chaleur.

La bride d'interface comprend un embout de connexion à la troisième sortie et un embout de connexion à la troisième entrée.

Selon un mode de réalisation, le premier échangeur de chaleur est configuré pour permettre un échange de chaleur entre le fluide réfrigérant et un liquide caloporteur.

Le premier échangeur est par exemple un échangeur à plaques.

Le premier échangeur de chaleur comprend un embout d'entrée de liquide caloporteur et un embout de sortie de liquide caloporteur s'étendant selon des directions parallèles.

Le premier échangeur de chaleur possède une forme générale de parallélépipède rectangle.

L'embout d'entrée de fluide réfrigérant et l'embout de sortie de fluide réfrigérant, l'embout d'entrée de liquide caloporteur et l'embout de sortie de liquide caloporteur sont disposés en saillie d'une même face du premier échangeur de chaleur.

Chacun des quatre embouts est disposé à proximité d'un angle d'une même face du premier échangeur de chaleur.

Selon un exemple de réalisation, le module de distribution de fluide réfrigérant comprend un premier échangeur de chaleur disposé dans le prolongement du bloc élémentaire du module de distribution de fluide réfrigérant.

Le module de distribution de fluide réfrigérant peut ainsi intégrer un échangeur de chaleur de manière compacte.

Selon un mode de réalisation, le module de distribution de fluide réfrigérant comprend un filtre disposé en partie dans le premier canal entre la cinquième zone de connexion et la première zone de connexion et en partie dans le troisième canal entre la première zone de connexion et le logement de réception du deuxième détendeur.

Le filtre est ainsi interne au bloc élémentaire, et ne modifie pas l'encombrement de celui-ci.

Selon un mode de réalisation, le module de distribution de fluide réfrigérant comprend une valve de remplissage en fluide réfrigérant. La valve de remplissage est disposée dans un cinquième logement du bloc élémentaire, le cinquième logement étant en communication fluidique avec le premier canal.

Le cinquième logement est cylindrique.

La cinquième zone de connexion débouche dans le cinquième logement.

Le cinquième logement et le filtre sont coaxiaux.

Un usinage selon un même axe permet ainsi de former conjointement le logement de la vanne de remplissage et la portion de canal recevant le filtre.

Une première portion du premier canal s'étend entre la première entrée et le logement de réception de la première vanne d'arrêt.

Une deuxième portion du premier canal s'étend entre le logement de réception de la première vanne d'arrêt et la cinquième zone de connexion.

Le sixième canal est rectiligne.

La deuxième portion du premier canal est coaxiale avec le sixième canal.

Un usinage selon un même axe permet ainsi de former conjointement la deuxième portion du premier canal ainsi que le sixième canal.

Une troisième portion du premier canal s'étend entre la cinquième zone de connexion et le logement de réception du premier détendeur.

Une quatrième portion du premier canal s'étend entre la première zone de connexion et le logement de réception du premier détendeur.

Une cinquième portion du premier canal s'étend entre le logement de réception du premier détendeur et la première sortie.

Une première portion du deuxième canal s'étend entre la deuxième entrée et la deuxième zone de connexion.

Une deuxième portion du deuxième canal s'étend entre la deuxième zone de connexion et la troisième zone de connexion.

Une troisième portion du deuxième canal s'étend entre la troisième zone de connexion et la deuxième sortie.

Une première portion du troisième canal s'étend entre la première zone de connexion et le logement de réception de la deuxième vanne d'arrêt.

Une deuxième portion du troisième canal s'étend entre le logement du deuxième détendeur et la troisième sortie.

La deuxième portion du troisième canal comprend deux tronçons s'étendant selon des axes perpendiculaires.

Le quatrième canal est rectiligne.

Le quatrième canal et la deuxième portion du deuxième canal sont coaxiaux.

Une première portion du cinquième canal s'étend entre la quatrième entrée et le logement de réception de la deuxième vanne d'arrêt.

Une deuxième portion du cinquième canal s'étend entre le logement de réception de la deuxième vanne d'arrêt et la troisième zone de connexion.

Selon un aspect du module de distribution de fluide réfrigérant, le quatrième canal, la deuxième portion du deuxième canal et le logement de réception de la deuxième vanne d'arrêt sont coaxiaux.

Un usinage selon un même axe permet ainsi de former conjointement le quatrième canal, la deuxième portion du deuxième canal et le logement de réception de la deuxième vanne d'arrêt.

Le sixième canal est rectiligne.

La quatrième zone de connexion débouche dans le logement de réception de la deuxième vanne d'arrêt.

L'invention, telle que définie dans la revendication 14, se rapporte également à un système de conditionnement thermique pour véhicule automobile, comprenant :
- un premier échangeur de chaleur configuré pour fonctionner en évaporateur,
- un deuxième échangeur de chaleur configuré pour fonctionner en évaporateur,
- un module de distribution de fluide réfrigérant tel que décrit précédemment, dans lequel :
   une entrée du premier échangeur est connectée à la troisième sortie,
   une sortie du premier échangeur est connectée à la troisième entrée,
   une entrée du deuxième échangeur est connectée à la première sortie,
   une sortie du deuxième échangeur est connectée à la deuxième entrée,
- une première branche de circulation de fluide réfrigérant, comprenant successivement selon un sens de circulation du fluide réfrigérant :
   -- un compresseur comprenant au moins une entrée et une sortie,
   -- un condenseur,
   -- un troisième dispositif de détente,
   -- un troisième échangeur de chaleur configuré pour fonctionner sélectivement en évaporateur ou en condenseur,
      une sortie du troisième échangeur étant connectée à la quatrième entrée du module de distribution, et l'entrée du compresseur étant connectée à la deuxième sortie,
- une deuxième branche de circulation de fluide réfrigérant, reliant un point de raccordement disposé sur la première branche de circulation à la première entrée du module de distribution.

Selon un mode de réalisation du système de conditionnement thermique :
- le premier échangeur est configuré pour être couplé thermiquement avec un élément d'une chaine de traction électrique d'un véhicule automobile,
- le deuxième échangeur de chaleur est configuré pour échanger de la chaleur avec un flux d'air intérieur à un habitacle du véhicule,
- le troisième échangeur de chaleur est configuré pour échanger de la chaleur avec un flux d'air intérieur à un habitacle du véhicule.

Le module de fluide réfrigérant est ainsi intégré à un système de conditionnement thermique pouvant fonctionner en mode refroidissement de l'habitacle d'un véhicule, en mode pompe à chaleur ou en mode déshumidification de l'habitacle, tout en assurant un conditionnement thermique d'un élément de la chaine de traction du véhicule. L'essentiel des composants nécessaires est intégré au module, ce qui permet une intégration compacte du système de conditionnement thermique.

L'élément de la chaine de traction électrique peut comprendre une batterie de stockage d'énergie électrique.

L'élément de la chaine de traction électrique peut comprendre un module électronique de pilotage d'un moteur électrique de traction du véhicule.

La première branche de circulation de fluide réfrigérant comprend un dispositif d'accumulation de fluide réfrigérant disposé entre le condenseur et le point de raccordement.

### Brève description des dessins

D'autres caractéristiques, détails et avantages apparaîtront à la lecture de la description détaillée ci-après, et à l'analyse des dessins annexés, sur lesquels :
[Fig. 1] est une vue schématique d'un système de conditionnement thermique intégrant un module de distribution selon un premier mode de réalisation,
[Fig. 2] est une vue schématique d'un système de conditionnement thermique intégrant un module de distribution selon un deuxième mode de réalisation,
[Fig. 3] est une vue schématique, en perspective, du module de distribution de fluide réfrigérant schématisé sur la figure 1,
[Fig. 4] est une vue de détail, en perspective, d'un bloc élémentaire faisant partie du module de distribution de fluide réfrigérant de la figure 1,
[Fig. 5] est une autre vue de détail, en perspective, du bloc élémentaire de la figure 4,
[Fig. 6] est une vue en perspective du module de distribution de fluide réfrigérant schématisé sur la figure 1,
[Fig. 7] est une autre vue en perspective du module de distribution de fluide réfrigérant de la figure 6,
[Fig. 8] est une autre vue de détail, en perspective, du bloc élémentaire de la figure 4,
[Fig. 9] est une autre vue de détail, en perspective, du bloc élémentaire de la figure 4,
[Fig. 10] est une vue éclatée, en perspective, d'une partie du module de distribution de fluide réfrigérant des figures 6 et 7,
[Fig. 11] est autre une vue éclatée, en perspective, d'une partie du module de distribution de fluide réfrigérant des figures 6 et 7,
[Fig. 12] est autre une vue illustrant certains composants du module de distribution de fluide réfrigérant des figures 6 et 7.

### Description des modes de réalisation

Afin de faciliter la lecture des figures, les différents éléments ne sont pas nécessairement représentés à l'échelle. Sur ces figures, les éléments identiques portent les mêmes références. Certains éléments ou paramètres peuvent être indexés, c'est-à-dire désignés par exemple par premier élément ou deuxième élément, ou encore premier paramètre et second paramètre, etc. Cette indexation a pour but de différencier des éléments ou paramètres similaires, mais non identiques. Cette indexation n'implique pas une priorité d'un élément, ou paramètre par rapport à un autre et on peut interchanger les dénominations.

Le terme « un deuxième élément est placé entre un premier élément et un troisième élément » signifie que le plus court trajet pour passer du premier élément au troisième élément passe par le deuxième élément.

Quand il est précisé qu'un sous-système comporte un élément donné, cela n'exclut pas la présence d'autres éléments dans ce sous-système.

Le système de conditionnement thermique 100 qui va être décrit peut équiper un véhicule automobile. Un dispositif de compression 7 permet de faire circuler un fluide réfrigérant dans un circuit fermé 10 de circulation de fluide réfrigérant. Le dispositif de compression 7 peut être un compresseur électrique, c'est-à-dire un compresseur dont les pièces mobiles sont entrainées par un moteur électrique. Le dispositif de compression 7 comporte un côté aspiration du fluide réfrigérant à basse pression, encore appelé entrée 7a du dispositif de compression, et un côté refoulement du fluide réfrigérant à haute pression, encore appelé sortie 7b du dispositif de compression. Les pièces mobiles internes du compresseur 7 font passer le fluide réfrigérant d'une basse pression côté entrée 7a à une haute pression côté sortie 7b. Après détente dans un ou plusieurs dispositifs de détente, le fluide réfrigérant revient à l'entrée 7a du compresseur 7 et recommence un nouveau cycle thermodynamique.

Une unité électronique de contrôle 60 reçoit des informations de différents capteurs mesurant notamment les caractéristiques du fluide réfrigérant. L'unité électronique de contrôle 60 reçoit également des consignes émises par les occupants du véhicule, comme par exemple la température souhaitée à l'intérieur de l'habitacle. L'unité électronique de contrôle 60 met en œuvre des lois de contrôle permettant le pilotage des différents actionneurs, afin d'assurer le contrôle du système de conditionnement thermique 100 de façon à assurer les consignes reçues.

Le circuit 10 de circulation du fluide réfrigérant possède plusieurs ramifications raccordées entre elles. Chaque point de raccordement permet au fluide réfrigérant de passer dans l'une ou l'autre des portions de circuit se rejoignant à ce point de raccordement. La répartition du fluide réfrigérant entre les portions de circuit se rejoignant en un point de raccordement se fait en jouant sur l'ouverture ou la fermeture des vanne d'arrêt, clapet anti-retour ou dispositif de détente compris sur chacune des branches. Autrement dit, chaque point de raccordement est un moyen de redirection du fluide réfrigérant arrivant à ce point de raccordement. Des vannes d'arrêt et des clapets antiretour permettent ainsi de diriger sélectivement le fluide réfrigérant dans les différentes branches du circuit de réfrigérant, afin d'assurer différents modes de fonctionnement, comme il sera décrit ultérieurement.

Le fluide réfrigérant utilisé par le circuit 10 de fluide réfrigérant est ici un fluide chimique tel que le R1234yf. D'autres fluides réfrigérants peuvent aussi être employés, comme par exemple le R134a, le R290, ou encore le R744.

Sur les différentes figures, l'axe X correspond à l'axe longitudinal du module 50, l'axe Y correspond à l'axe transversal du module 50, et l'axe Z correspond à un troisième axe perpendiculaire aux deux autres axes. L'axe longitudinal X peut coïncider avec l'axe longitudinal du véhicule lorsque le module de distribution 50 est dans sa position nominale d'installation dans le véhicule. De même, l'axe transversal Y peut correspondre à l'axe transversal du véhicule. L'axe Z peut correspondre à l'axe vertical. Une autre orientation du module 50 est toutefois possible.

Au sens de la présente demande, les termes 'canal' et 'canal de circulation de fluide réfrigérant' sont équivalents. Chaque canal possède exactement une entrée et une sortie. Autrement dit, un canal n'est pas ramifié. Les portions de circuit disposées en parallèle sont formées par au moins deux canaux distincts. Chaque entrée du module est une entrée de fluide réfrigérant et chaque sortie est une sortie de fluide réfrigérant.

Chaque zone de connexion établit une communication fluidique entre deux canaux. Une zone de connexion est délimitée par l'intersection entre deux canaux. On parle de zone de connexion et non de point de connexion car les canaux de circulation de fluide sont des éléments volumiques. Chaque zone de connexion forme un piquage d'un canal sur un autre canal.

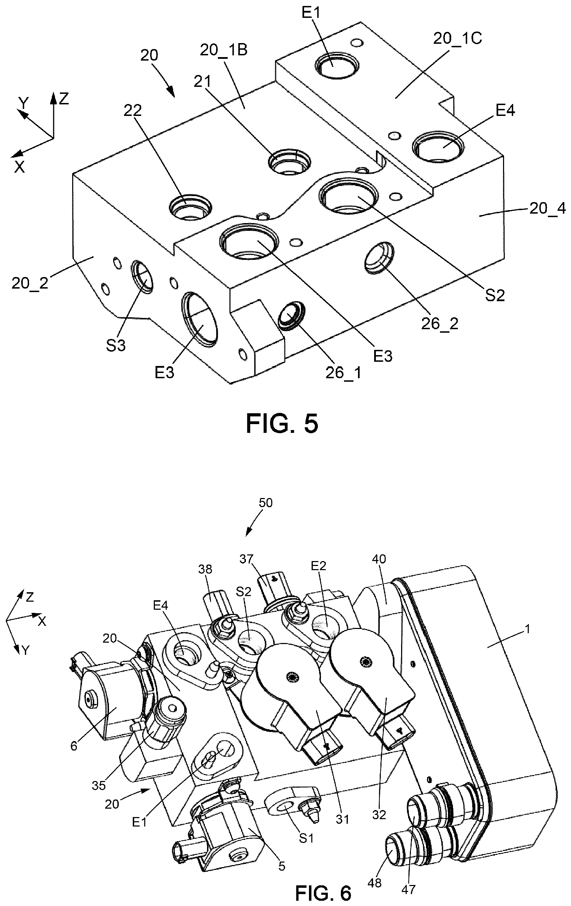

On a représenté sur la figure 6 un module distribution 50 de fluide réfrigérant apte à être intégré dans un système de conditionnement thermique 100 d'un véhicule automobile.

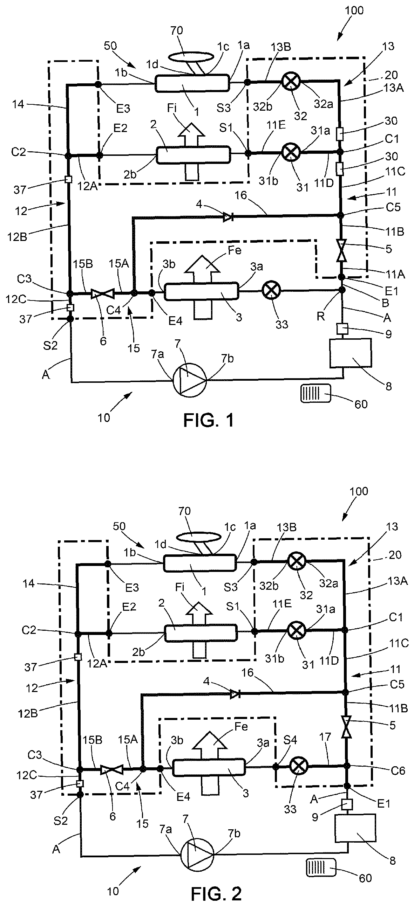

Le schéma de principe de ce système de conditionnement thermique 100 intégrant le module de distribution 50 est représenté sur la figure 1.

Le module de distribution 50 de fluide réfrigérant comporte :
- un premier canal 11 de circulation de fluide réfrigérant, reliant une première entrée E1 de fluide réfrigérant et une première sortie S1 de fluide réfrigérant,
- un deuxième canal 12 de circulation reliant une deuxième entrée E2 et une deuxième sortie S2,
- un troisième canal 13 de circulation reliant une première zone de connexion C1 disposée sur le premier canal 11 et une troisième sortie S3,

- un quatrième canal 14 de circulation reliant une troisième entrée E3 et une deuxième zone de connexion C2 disposée sur le deuxième canal 12 entre la deuxième entrée E2 et la deuxième sortie S2,
- un cinquième canal 15 de circulation reliant une quatrième entrée E4 et une troisième zone de connexion C3 disposée sur le deuxième canal 12 entre la deuxième zone de connexion C2 et la deuxième sortie S2,
- un sixième canal de circulation 16 reliant une quatrième zone de connexion C4 disposée sur le cinquième canal 15 et une cinquième zone de connexion C5 disposée sur le premier canal 11 entre la première entrée E1 et la première zone de connexion C1.
Le sixième canal 16 comprend une vanne unidirectionnelle 4 configurée pour autoriser une circulation de fluide réfrigérant de la quatrième zone de connexion C4 vers la cinquième zone de connexion C5 et configurée pour interdire une circulation de fluide réfrigérant de la cinquième zone de connexion C5 vers la quatrième zone de connexion C4.
Chaque canal de circulation de fluide réfrigérant 11, 12, 13, 14, 15, 16 est formé par un évidement interne d'un même bloc élémentaire 20.

Les canaux 11, 12, 13, 14, 15, 16 de circulation de fluide réfrigérant sont ainsi intégrés à l'intérieur de la structure du module de distribution 50 de fluide réfrigérant. Le module 50 ne comporte pas de tuyaux ou durites saillantes. L'ensemble des canaux permettant de réaliser la distribution de fluide réfrigérant, c'est-à-dire l'alimentation en fluide réfrigérant de plusieurs échangeurs de chaleur, ainsi que la collecte du fluide réfrigérant sortant de ces échangeurs, peut ainsi être réalisée grâce à une pièce unique. L'intégration des différents éléments est facilitée, car le module peut être une pièce compacte. La complexité d'intégration est également réduite, car une pièce standard peut être utilisée pour différentes applications.

Sur la figure 1, la ligne en traits pointillés délimite la partie du schéma de principe qui fait partie du bloc élémentaire 20 du module de distribution 50 selon le premier mode de réalisation.

Le module de distribution 50 de fluide réfrigérant peut alimenter un système de conditionnement thermique, par exemple un système de conditionnement thermique pour véhicule automobile.

La figure 2 schématise un système de conditionnement thermique 100 comportant un module de distribution 50 selon un deuxième mode de réalisation. Le schéma de principe du système de conditionnement thermique 100 est inchangé par rapport à la figure 1, mais le module de distribution 50 de fluide réfrigérant intègre une portion supplémentaire du circuit 10 de fluide réfrigérant. Comme précédemment, la ligne en traits pointillés indique la partie du schéma de principe incluse dans le bloc élémentaire 20.

Selon ce deuxième mode de réalisation, le module de distribution 50 de fluide réfrigérant comporte un septième canal 17 de circulation reliant une quatrième sortie S4 et une sixième zone de connexion C6. La sixième zone de connexion C6 est disposée sur le premier canal 11 entre la cinquième zone de connexion C5 et la première entrée E1.

Ce deuxième mode de réalisation diffère du premier par la présence d'une sortie supplémentaire S4. L'alimentation en fluide réfrigérant d'un échangeur de chaleur supplémentaire est ainsi possible, ce qui permet d'augmenter les fonctionnalités possibles du module de distribution de fluide réfrigérant.

Les canaux de circulation de fluide possèdent ici une section transversale circulaire. Les canaux peuvent ainsi être réalisés par des usinages simples, comme des perçages du bloc élémentaire 20.

Le diamètre des canaux de circulation de fluide réfrigérant est compris entre 8 millimètres et 30 millimètres.

Le premier canal 11 comprend un premier détendeur 31 disposé entre la première zone de connexion C1 et la première sortie S1.

Le module de distribution de fluide réfrigérant 50 peut ainsi alimenter en fluide réfrigérant à basse pression un échangeur de chaleur. Cet échangeur de chaleur 2 peut ainsi fonctionner en évaporateur.

Le troisième canal 13 comprend un deuxième détendeur 32. Le deuxième détendeur 32 est disposé entre la première zone de connexion C1 et la troisième sortie S3.

Le module 50 de distribution de fluide réfrigérant peut ainsi également alimenter en fluide réfrigérant à basse pression un autre échangeur de chaleur fonctionnant en évaporateur.

Le premier détendeur 31 peut être un détendeur électronique. De même, le deuxième détendeur 32 peut être un détendeur électronique.

Dans un détendeur électronique, la section de passage permettant de faire passer le fluide réfrigérant peut être ajustée de manière continue entre une position de fermeture et une position d'ouverture maximale. Pour cela, l'unité de contrôle 60 du système de conditionnement thermique 100 pilote un moteur électrique qui déplace un obturateur mobile contrôlant la section de passage offerte au fluide réfrigérant.

Le premier canal 11 comprend une première vanne d'arrêt 5 disposée entre la première entrée E1 et la cinquième zone de connexion C5.

La première vanne d'arrêt 5 est ici une vanne à commande électrique.

Selon le deuxième mode de réalisation, dans lequel le module de distribution 50 de fluide réfrigérant comprend une quatrième sortie S4, la première vanne d'arrêt 5 est disposée entre la cinquième zone de connexion C5 et la sixième zone de connexion C6.

Le cinquième canal 15 comprend une deuxième vanne d'arrêt 6 disposée entre la quatrième zone de connexion C4 et la troisième zone de connexion C3.

La deuxième vanne d'arrêt 6 est aussi une vanne à commande électrique.

Une unité électronique de contrôle 60 peut commander de manière indépendante l'ouverture et la fermeture de la première vanne d'arrêt 5 et de la deuxième vanne d'arrêt 6. Autrement dit, l'état d'une vanne d'arrêt ne dépend pas de l'état de l'autre vanne d'arrêt. Les deux vannes d'arrêts 5, 6 permettent d'interrompre la circulation du fluide réfrigérant de façon à permettre différents modes de fonctionnement.

La vanne unidirectionnelle 4 est une vanne passive. La vanne unidirectionnelle 4 est par exemple un clapet anti-retour.

La vanne unidirectionnelle 4 est entièrement contenue à l'intérieur du bloc élémentaire 20. Autrement dit, une fois que le bloc élémentaire 20 est équipé de tous les composants de gestion de circulation et détente de fluide réfrigérant, la vanne unidirectionnelle 4 n'est plus visible, et n'est plus accessible.

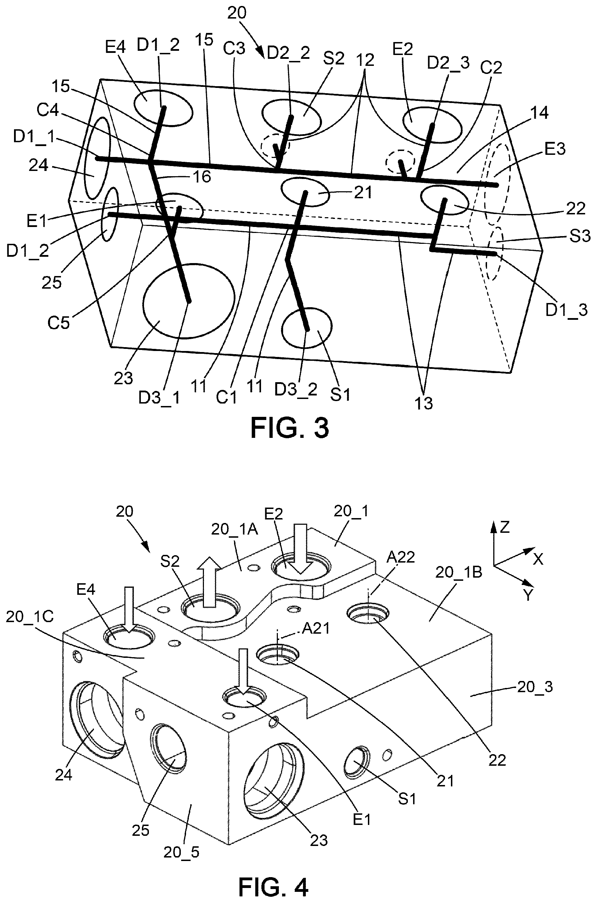

La figure 4 et la figure 5 représentent le bloc élémentaire 20 pris isolément.

Selon l'exemple de réalisation représenté, le bloc élémentaire 20 a sensiblement la forme d'un parallélépipède rectangle. Cette forme permet d'intégrer facilement divers composants comme des détendeurs et des vannes d'arrêt, tout en optimisant la compacité.

Le bloc élémentaire 20 comprend six faces. Deux faces sont parallèles au plan défini par les directions X et Y. Deux autres faces sont parallèles au plan défini par les directions Y et Z. Deux autres faces sont parallèles au plan défini par les directions X et Z. Le bloc élémentaire peut comprendre des zones en saillie des faces, permettant la fixation au véhicule.

Le bloc élémentaire 20 peut être en aluminium. Le bloc élémentaire 20 peut ainsi avoir un poids modéré et un cout de fabrication faible.

Le bloc élémentaire 20 est par exemple obtenu par extrusion. Les défauts internes de type porosités sont ainsi évités. Les canaux de circulation de fluide réfrigérant sont formés par usinage du bloc élémentaire 20. L'usinage d'un bloc plein obtenu par extrusion est possible. Les surfaces usinées sont en contact avec le fluide réfrigérant. Grace à l'absence de porosités, l'étanchéité du bloc élémentaire 20 est garanti, même lorsque le fluide réfrigérant est à haute pression.

La hauteur du bloc élémentaire 20, c'est-à-dire la dimension selon l'axe Z sur les figures, est comprise entre 90 millimètres et 130 millimètres.
La largeur du bloc élémentaire 20, c'est-à-dire la dimension selon l'axe Y sur les figures, est comprise entre 180 millimètres et 240 millimètres.
La longueur du bloc élémentaire, c'est-à-dire la dimension selon l'axe X sur les figures, est comprise entre 200 millimètres et 280 millimètres.

Les canaux de circulation de fluide réfrigérant 11, 12, 13, 14, 15, 16 sont formés par une succession de portions cylindriques rectilignes en communication fluidique les unes avec les autres.

Les canaux de circulation peuvent ainsi être obtenus par des usinages simples de type perçage. Le cout de fabrication du module de distribution de fluide réfrigérant peut ainsi être diminué.

Sur la figure 3, les traits noirs épais indiquent schématiquement la direction de perçage permettant d'engendrer les différents canaux. Sur cette figure, les variations de section des canaux ne sont pas représentées, seule la direction selon laquelle chaque canal peut être engendré par perçage est représentée.

Le trait désigné par D1_1 correspond à une première direction de perçage. Cette direction de perçage permet de notamment de générer une partie du cinquième canal 15, une partie du deuxième canal 12 et le quatrième canal 14. Le trait D1_2 désigne la direction d'un deuxième perçage, parallèle à D1_1. Ce perçage permet notamment de générer une partie du premier canal 11 et une partie du troisième canal 13. Le trait D1_3 désigne la direction d'un troisième perçage, parallèle à D1_1 et à D1_2. Ce perçage permet de générer une autre partie du troisième canal 13, ainsi que la troisième sortie S3. De la même manière, les directions de perçage désignées par D2_1, D2_2, D2_3 sont parallèles entre elles. La direction D2_1 permet de générer la quatrième entrée E4 et une partie du cinquième canal 15. La direction D2_2 permet de générer la deuxième sortie S2 et une partie du deuxième canal 12. La direction D2_3 permet de générer la deuxième entrée E2 ainsi qu'une autre partie du deuxième canal 12.
De la même manière, les directions désignées par D3_1 et D3_2 sont parallèles entre elles et permettent de générer notamment d'autres parties de canaux. Sur la figure 3, les différentes directions de perçage, notamment D1_1 à D1_3, D2_1 et D2_2, D3_1 et D3_2, sont représentées en traits pleins épais même pour des portions non visibles de l'extérieur car masquées par une surface extérieure du bloc élémentaire 20.

Selon l'exemple représenté, chaque canal de circulation de fluide réfrigérant 11, 12, 13, 14, 15, 16 est formé par une succession de portions cylindriques coaxiales ou s'étendant selon des axes sécants.

Par exemple, chaque canal de circulation de fluide réfrigérant est formé par une succession de portions cylindriques coaxiales ou s'étendant selon des axes perpendiculaires.

Le premier canal 11 du bloc élémentaire 20 comprend un premier logement 21 de réception du premier détendeur 31. Le premier logement 21 est cylindrique et s'étend selon un axe A21.

Le premier canal 11 débouche dans le premier logement 21. L'axe A21 du premier logement 21 est non concourant avec l'axe du premier canal 11.

Le premier détendeur 31 comprend une entrée radiale 31a de fluide réfrigérant et une sortie axiale 31b de fluide réfrigérant.

Le logement 21 du premier détendeur 31 est de forme cylindrique. Le logement 21 comprend une première partie cylindrique se prolongeant par une deuxième partie cylindrique coaxiale, dont le diamètre est inférieur au diamètre de la première partie. Le logement 21 comprend un filetage femelle dans lequel un filetage 29 du premier détendeur 31 peut s'engager afin de fixer le premier détendeur 31.

Le premier canal 11 comprend une portion 11C amont au premier détendeur 31 qui débouche avec le pourtour cylindrique de la première partie cylindrique du logement de réception 21. Le premier canal 11 comprend une portion 11D aval au premier détendeur 31, qui comprend la deuxième partie cylindrique du logement 21. Un premier joint 27 assure l'étanchéité du logement 21 vers l'extérieur lorsque le premier détendeur 31 est monté dans le module 50. Un deuxième joint 28 assure l'étanchéité du logement de réception 21 vers la partie aval 11D du premier canal 11. Ainsi, lorsque le détendeur 31 est monté dans le logement de réception 21, le fluide réfrigérant peut passer de la portion amont 11C du premier canal 11 à la portion aval 11D uniquement en circulant à travers le détendeur 31. La section de passage du fluide réfrigérant à travers le premier détendeur 31 peut varier de façon continue en fonction de la position d'un obturateur mobile. L'obturateur mobile est actionné par un moteur électrique entrainant un mécanisme d'actionnement.

Le troisième canal 13 du bloc élémentaire 20 comprend un deuxième logement 22 de réception du deuxième détendeur 32. Le deuxième détendeur 32 est disposé entre la première zone de connexion C1 et la troisième sortie S3.

Le logement 22 du deuxième détendeur 32 peut être identique au logement 21 du premier détendeur 31, c'est-à-dire avoir la même forme et les mêmes dimensions.

Le deuxième détendeur 32 comprend une entrée radiale 32a de fluide réfrigérant et une sortie axiale 32b de fluide réfrigérant. Le deuxième détendeur 32 fonctionne selon le même principe que le premier détendeur 31.
Le premier détendeur 31 et le deuxième détendeur 32 peuvent être identiques.

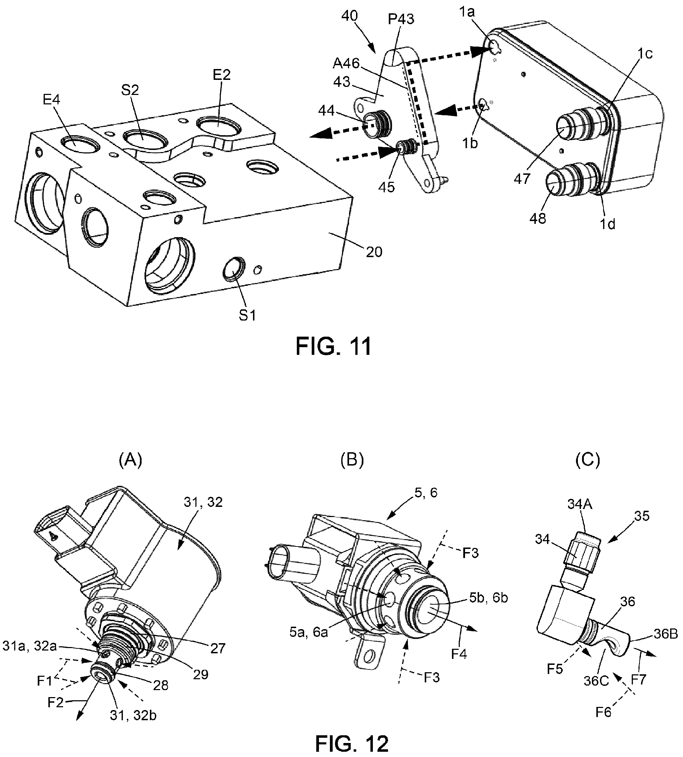

La partie A de figure 12 représente les détendeurs 31, 32 non montées au module 50. La partie B de la figure 12 représente les vannes d'arrêt 5,6 non montées au module 50.

La première vanne d'arrêt 5 comprend une entrée radiale 5a de fluide réfrigérant et une sortie axiale 5b de fluide réfrigérant.
La deuxième vanne d'arrêt 6 comprend une entrée radiale 6a de fluide réfrigérant et une sortie axiale 6b de fluide réfrigérant.

La première vanne d'arrêt 5 et la deuxième vanne d'arrêt 6 peuvent être identiques.

La première vanne d'arrêt 5 et la deuxième vanne d'arrêt 6 fonctionnent selon un principe identique au premier détendeur 31 et au deuxième détendeur 32 en termes de disposition des entrées et sorties de fluide réfrigérant. La première vanne d'arrêt 5 et la deuxième vanne d'arrêt 6 possèdent deux positions de fonctionnement stable : une position fermée, dans lequel le débit de fluide réfrigérant à travers la vanne est nul, et une position ouverte dans lequel le fluide réfrigérant peut traverser la vanne, la section de passage étant constante. Par débit nul, on entend nul aux fuites près.

Sur la partie A de la figure 12, les flèches en traits pointillés F1 schématisent pour les détendeurs 31, 32 le fluide réfrigérant entrant par les divers orifices d'entrée d'une entrée radiale, et les flèches en traits pleins F2 illustrent le fluide réfrigérant sortant de la sortie axiale.
Sur la partie B de la figure 12, les flèches F3 schématisent le fluide réfrigérant entrant dans les vannes d'arrêt 5, 6 par les multiples orifices de l'entrée radiale, et la flèche F4 schématise le fluide réfrigérant sortant par la sortie axiale.

Le premier canal 11 du bloc élémentaire 20 comprend un troisième logement 23 de réception de la première vanne d'arrêt 5.

Le logement 23 de la première vanne d'arrêt 5 comprend une première chambre cylindrique 23_1 possédant une paroi latérale et un fond 49 de forme annulaire. Le logement 23 comprend aussi une deuxième chambre 23_2 également cylindrique, coaxiale avec la première chambre 23_1, et débouchant dans le fond 49 de la première chambre 23_1. L'entrée radiale de la première vanne d'arrêt 5 débouche dans la première chambre cylindrique 23_1. La sortie axiale de la première vanne d'arrêt 5 débouche dans la deuxième chambre cylindrique 23_2.

Le cinquième canal 15 du bloc élémentaire 20 comprend un quatrième logement 24 de réception de la deuxième vanne d'arrêt 6. Le quatrième logement 24 est similaire au troisième logement 23.

Selon l'exemple illustré, notamment sur la figure 4, la deuxième entrée E2 et la deuxième sortie S2 sont disposées sur une première face 20_1 du bloc élémentaire 20. La première face 20_1 est plane.

La deuxième entrée E2 et la deuxième sortie S2 sont ici disposées sur une portion plane 20_1A d'une première face 20_1 du bloc élémentaire 20. Comme représenté notamment sur la figure 4, la première face 20_1 comprend deux portions planes 20_1A et 20_1B décalées l'une par rapport à l'autre le long de l'axe Z perpendiculaire aux deux portions planes. La deuxième portion plane 20_1B peut être formée par un lamage de la première face du bloc élémentaire 20. Le décalage entre les deux portions planes 20_1A et 20_1B permet de réduire l'encombrement selon la direction Z.

Comme mis en évidence sur la figure 5, la troisième entrée E3 et la troisième sortie S3 sont disposées sur une deuxième face 20_2 du bloc élémentaire 20.
La deuxième face 20_2 est ici plane.

Comme on peut le voir particulièrement sur la figure 4, la première sortie S1 est disposée sur une troisième face 20_3 du bloc élémentaire 20. La troisième face 20_3 est ici plane.

La première face 20_1, la deuxième face 20_2 et la troisième face 20_3 sont ici perpendiculaires deux à deux.

Le logement de réception 21 du premier détendeur 31 et le logement de réception 22 du deuxième détendeur 32 débouchent sur une même face du bloc élémentaire 20.
Les deux détendeurs 31, 32 sont ainsi regroupés.

Le logement de réception 21 du premier détendeur 31 et le logement de réception 22 du deuxième détendeur 32 débouchent sur la première face 20_1 du bloc élémentaire 20. Une même face du bloc élémentaire reçoit plusieurs éléments, ce qui facilite le montage.

Plus précisément, le logement de réception 21 du premier détendeur 31 et le logement de réception 22 du deuxième détendeur 32 débouchent sur la deuxième portion plane 20_1B de la première face 20_1.

La première entrée E1 et la quatrième sortie E4 sont disposées sur la première face 20_1 du bloc élémentaire 20.

Plus précisément, la première face 20_1 comprend une troisième portion plane 20_1C décalée par rapport aux deux portions planes 20_1A, 20_1B le long de l'axe Z perpendiculaire aux trois portions planes 20_1A, 20_1B, 20_1C.
Le logement de réception 21 du premier détendeur 31 et le logement de réception 22 du deuxième détendeur 32 débouchent sur la troisième portion plane 20_1C de la première face 20_1.

Le deuxième canal 12 comprend ici un capteur de pression 37 de fluide réfrigérant disposé entre la deuxième zone de connexion C2 et la troisième zone de connexion C3.

Le deuxième canal 12 comprend aussi un capteur de température 38 de fluide réfrigérant disposé entre la troisième zone de connexion C3 et la deuxième sortie S2.

Ces deux capteurs 37, 38 fournissent des informations sur l'état thermodynamique du fluide réfrigérant, permettant une régulation des systèmes de conditionnement thermiques intégrant le module de distribution de fluide réfrigérant.

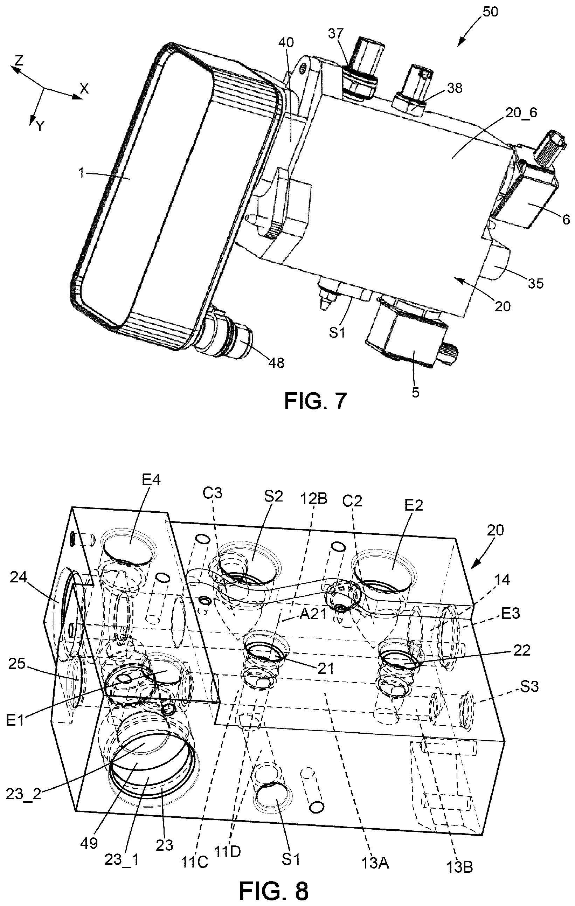

Selon l'exemple représenté, notamment sur la figure 6 et sur la figure 7, le capteur de pression 37 de fluide réfrigérant et le capteur de température 38 de fluide réfrigérant sont disposés sur une quatrième face 20_4 du bloc élémentaire 20, opposée à la troisième face 20_3.

Plus précisément, le capteur de pression 37 est disposé dans un logement 26_1 débouchant sur la quatrième face 20_4 du bloc élémentaire 20. Le capteur de température 38 est disposé dans un logement 26_2 débouchant sur la quatrième face 20_4 du bloc élémentaire 20. Les capteurs 37, 38 sont vissés dans leur logement respectif 26_1, 26_2 et un joint fait l'étanchéité avec l'extérieur du module 50. L'élément actif de chaque capteur est en contact avec le fluide réfrigérant. Les deux capteurs 37, 38 permettent de connaitre l'état du fluide réfrigérant à basse pression qui va ressortir du bloc élémentaire par la deuxième sortie S2.

Comme mis en évidence sur la figure 7, seule la face 20_6 du bloc élémentaire 20 est dépourvue d'ouverture. Cette face peut ainsi être en contact avec une partie du véhicule faisant support pour le module 50. Sur les différentes figures, le dispositif de fixation du module 50 au véhicule n'a pas été représenté.

Selon l'exemple illustré, le module de distribution 50 de fluide réfrigérant comprend une bride d'interface 40 avec un premier échangeur de chaleur 1. La bride d'interface 40 comporte :
- un premier canal de transfert 41 reliant la troisième sortie S3 du module 50 à une entrée 1a de fluide réfrigérant du premier échangeur de chaleur 1,
- un deuxième canal de transfert 42 reliant une sortie 1b du premier échangeur de chaleur 1 et la troisième entrée E3 du module 50.
La bride d'interface 40 est solidaire du bloc élémentaire 20 et du premier échangeur de chaleur 1.

La bride d'interface 40 est intercalée entre le premier échangeur 1 et la deuxième face 20_2 du bloc élémentaire 20. La bride d'interface 40 permet d'ajuster la position relative du premier échangeur de chaleur 1 et du module 50 de distribution de fluide réfrigérant, c'est-à-dire de faire coïncider les entrées/sorties du premier échangeur 1 avec les entrées/sorties correspondantes du bloc élémentaire 20.

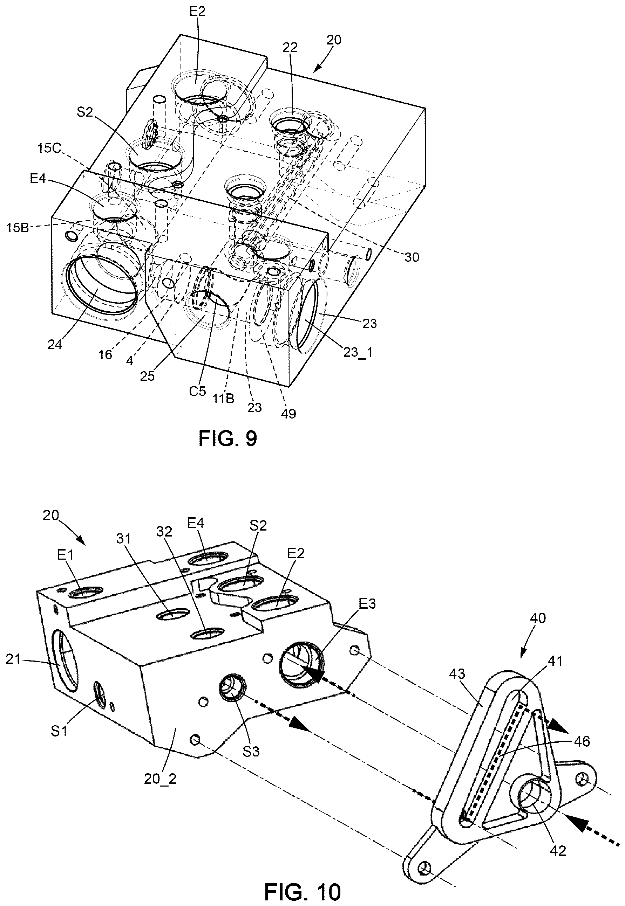

La bride d'interface 40 est détaillée sur la figure 10 et la figure 11. La bride d'interface 40 comprend une portion plane 43 et deux embouts de connexion 44, 45 au bloc élémentaire 20. Les embouts 44, 45 s'étendent transversalement à la portion plane 43.

Le premier canal de transfert 41 comprend une rainure rectiligne 46 s'étendant selon un axe parallèle au plan d'extension de la portion plane 43. Le deuxième canal de transfert 42 est perpendiculaire au plan d'extension P43 de la portion plane 43.

La bride d'interface 40 possède une forme générale de triangle rectangle. La rainure rectiligne 46 du premier canal de transfert 41 est parallèle à l'hypoténuse du triangle rectangle.

La bride d'interface 40 est en appui sur une face du bloc élémentaire 20. La bride d'interface 40 est en appui sur la deuxième face 20_2 du bloc élémentaire 20 lorsque le module 50 est assemblé.

La bride d'interface 40 comprend un embout 44 de connexion à la troisième sortie S3 et un embout 45 de connexion à la troisième entrée E3. Lorsque le module 50 est assemblé, l'embout 44 est inséré dans la troisième sortie S3 et l'embout 45 est inséré dans la troisième entrée E3. Chaque embout 44, 45 comprend deux gorges cylindriques. Deux joints toriques, non numérotés sur les figures, sont chacun disposés dans une gorge d'un embout de façon à assurer l'étanchéité avec le bloc élémentaire 20.

La bride d'interface 40 peut être brasée au premier échangeur de chaleur 1. Dans ce cas, la bride d'interface 40 et le premier échangeur 1 forment un ensemble indémontable. Le montage du premier échangeur 1 avec le bloc élémentaire 20 se fait simplement en insérant les deux embouts 44, 45 dans le bloc élémentaire 20. Autrement dit, le module 50 de distribution de fluide réfrigérant, tel qu'il est représenté sur les figures 6 et 7, intègre la bride d'interface 40 et le premier échangeur 1. Il intègre également les deux détendeurs 31, 32, les deux vannes d'arrêts 5,6 et les deux capteurs de pression et de température 37, 38.

Selon l'exemple illustré, le premier échangeur de chaleur 1 est configuré pour permettre un échange de chaleur entre le fluide réfrigérant et un liquide caloporteur. Les signes 1a, 1b correspondent aux entrées/sorties de fluide réfrigérant et les signes 1c, 1d aux entrées/sorties de liquide caloporteur. Le liquide caloporteur est par exemple un mélange d'eau et de glycol.

Le premier échangeur 1 est par exemple un échangeur à plaques.

Le premier échangeur de chaleur 1 possède une forme générale de parallélépipède rectangle.

Le premier échangeur de chaleur 1 comprend un embout d'entrée 47 de liquide caloporteur et un embout de sortie 48 de liquide caloporteur s'étendant selon des directions parallèles.

L'embout d'entrée 45 de fluide réfrigérant, l'embout de sortie 44 de fluide réfrigérant, l'embout d'entrée 47 de liquide caloporteur et l'embout de sortie 48 de liquide caloporteur sont disposés en saillie d'une même face du premier échangeur de chaleur 1. Chacun des quatre embouts 44, 45, 46, 47 est disposé à proximité d'un angle d'une même face du premier échangeur de chaleur 1.

Le premier échangeur de chaleur 1 est disposé dans le prolongement du bloc élémentaire 20 du module 50 de distribution de fluide réfrigérant.

Le module de distribution 50 de fluide réfrigérant peut ainsi intégrer un échangeur de chaleur de manière particulièrement compacte. La bride d'interface 40 permet cet agencement compact, sans pénaliser les performances thermodynamiques du premier échangeur 1. En effet, le deuxième canal 42 est totalement rectiligne, ce qui signifie que la perte de charge entre la sortie 1b du premier échangeur 1 et la troisième entrée E3 du bloc élémentaire est négligeable.

Le module de distribution 50 de fluide réfrigérant comprend également un filtre 30. Le filtre 30 est disposé en partie dans le premier canal 11 entre la cinquième zone de connexion C5 et la première zone de connexion C1. Le filtre 30 est aussi disposé en partie dans le troisième canal 13 entre la première zone de connexion C1 et le logement de réception 22 du deuxième détendeur 32.

Le filtre 30 est ainsi interne au bloc élémentaire 20, et ne modifie pas l'encombrement de celui-ci. L'agencement du filtre 30 est détaillé à la figure 9. L'installation du filtre 30 ne réclame aucun usinage spécifique, puisque le filtre est simplement inséré dans les canaux déjà formés. Sur le schéma de principe de la figure 1, le filtre 30 a été représenté en deux parties distinctes, de façon à simplifier la représentation. Dans l'exemple de la figure 9, le filtre 30 est monobloc.

Le filtre 30 comprend une structure support cylindrique sur laquelle un treillis filtrant est disposé, formant une chambre cylindrique. Le fluide réfrigérant est admis à l'intérieur de la chambre cylindrique et ressort filtré par la surface latérale formée par le treillis filtrant. Le fluide réfrigérant filtré rejoint l'entrée du premier détendeur 31 ainsi que du deuxième détendeur 32.

Le module de distribution 50 de fluide réfrigérant comprend une valve de remplissage 35 en fluide réfrigérant. La valve de remplissage 35 est disposée dans un cinquième logement 25 du bloc élémentaire 20, le cinquième logement 25 étant en communication fluidique avec le premier canal 11.

Le cinquième logement 25 est cylindrique.
La cinquième zone de connexion C5 débouche dans le cinquième logement 25.
Le cinquième logement 25 et le filtre 30 sont coaxiaux.

Un usinage selon un même axe permet ainsi de former conjointement le logement 25 de la vanne de remplissage 35 et la portion de canal recevant le filtre 30. Lors du montage du module 50, le filtre 30 est inséré et mis en place, puis la vanne de remplissage 35 est insérée dans son logement 25.

La partie C de la figure 12 détaille la vanne de remplissage 35. La vanne de remplissage 35 comprend un élément de remplissage 34 et une portion tubulaire 36. L'élément de remplissage 34 est externe au bloc élémentaire 20. La portion tubulaire 36 est insérée dans le bloc élémentaire 20. La portion tubulaire 36 comprend une sortie axiale 36B et un évidement 36C permettant de communiquer radialement avec la cinquième zone de connexion C5. Au niveau de l'évidement 36C, le flux de fluide réfrigérant F5 circulant dans le sixième canal 16 et provenant de la vanne unidirectionnelle 4 rejoint le flux de fluide réfrigérant F6 circulant dans la portion 11B du premier canal 11, et les deux flux mélangés, désignés par F7, ressortent par la sortie axiale 36 en direction du filtre 30.

On détaillera ci-dessous l'agencement des différentes portions des canaux de circulation de fluide réfrigérant, incluant les zones de connexion entre canaux.

Une première portion 11A du premier canal 11 s'étend entre la première entrée E1 et le logement de réception 23 de la première vanne d'arrêt 5.
Une deuxième portion 11B du premier canal 11 s'étend entre le logement de réception 23 de la première vanne d'arrêt 5 et la cinquième zone de connexion C5.
Le sixième canal 16 est rectiligne.
La deuxième portion 11B du premier canal 11 est coaxiale avec le sixième canal 16.

Un usinage selon un même axe permet ainsi de former conjointement la deuxième portion 11B du premier canal 11 ainsi que le sixième canal 16.

Une troisième portion 11C du premier canal 11 s'étend entre la cinquième zone de connexion C5 et le logement de réception 21 du premier détendeur 31.
Une quatrième portion 11D du premier canal 11 s'étend entre la première zone de connexion C1 et le logement de réception 21 du premier détendeur 31.
Une cinquième portion 11E du premier canal 11 s'étend entre le logement de réception 21 du premier détendeur 31 et la première sortie S1.

Une première portion 12A du deuxième canal 12 s'étend entre la deuxième entrée E2 et la deuxième zone de connexion C2.
Une deuxième portion 12B du deuxième canal 12 s'étend entre la deuxième zone de connexion C2 et la troisième zone de connexion C3.
Une troisième portion 12C du deuxième canal 12 s'étend entre la troisième zone de connexion C3 et la deuxième sortie S2.

Une première portion 13A du troisième canal 13 s'étend entre la première zone de connexion C1 et le logement de réception 24 de la deuxième vanne d'arrêt 6.
Une deuxième portion 13B du troisième canal 13 s'étend entre le logement 22 du deuxième détendeur 32 et la troisième sortie S3.
La deuxième portion 13B du troisième canal 13 comprend deux tronçons s'étendant selon des axes perpendiculaires.

Le quatrième canal 14 est rectiligne.
Le quatrième canal 14 et la deuxième portion 12B du deuxième canal 12 sont coaxiaux.

Une première portion 15A du cinquième canal 15 s'étend entre la quatrième entrée E4 et le logement de réception 24 de la deuxième vanne d'arrêt 6.
Une deuxième portion 15B du cinquième canal 15 s'étend entre le logement de réception 24 de la deuxième vanne d'arrêt 6 et la troisième zone de connexion C3.

Le quatrième canal 14, la deuxième portion 12B du deuxième canal 12 et le logement de réception 24 de la deuxième vanne d'arrêt 6 sont coaxiaux.

Un usinage selon un même axe permet ainsi de former conjointement le quatrième canal 14, la deuxième portion 12B du deuxième canal 12 et le logement de réception 24 de la deuxième vanne d'arrêt 6. De plus, la section de passage du quatrième canal 14 et de la deuxième portion 12B du deuxième canal 12 peut être choisie de façon à réduire la perte de charge de façon à optimiser les performances thermodynamiques du système de conditionnement thermique 100 sur lequel le module de distribution de fluide réfrigérant 50 est monté. Autrement dit, les canaux parcourus par du fluide réfrigérant à basse pression peuvent avoir un diamètre supérieur à celui des canaux parcourus par du fluide réfrigérant à haute pression.

Le sixième canal 16 est rectiligne.

La quatrième zone de connexion C4 débouche dans le logement de réception 24 de la deuxième vanne d'arrêt 6.

On décrira maintenant le fonctionnement d'un système de conditionnement thermique 100 dans lequel le module 50 de distribution de fluide réfrigérant est intégré.

Le système de conditionnement thermique 100 pour véhicule automobile, schématisé sur la figure 1, comprend :
- un premier échangeur de chaleur 1 configuré pour fonctionner en évaporateur,
- un deuxième échangeur de chaleur 2 configuré pour fonctionner en évaporateur,
- un module de distribution 50 de fluide réfrigérant tel que décrit précédemment, dans lequel :
   une entrée du premier échangeur 1 est connectée à la troisième sortie S3,
   une sortie du premier échangeur 1 est connectée à la troisième entrée E3,
   une entrée du deuxième échangeur 2 est connectée à la première sortie S1,
   une sortie du deuxième échangeur 2 est connectée à la deuxième entrée E2,
- une première branche de circulation A de fluide réfrigérant, comprenant successivement selon un sens de circulation du fluide réfrigérant :
   -- un compresseur 7 comprenant au moins une entrée 7a et une sortie 7b,
   -- un condenseur 8,
   -- un troisième dispositif de détente 33,
   -- un troisième échangeur de chaleur 3 configuré pour fonctionner sélectivement en évaporateur ou en condenseur,
      une sortie du troisième échangeur 3 étant connectée à la quatrième entrée E4 du module de distribution 50, et l'entrée 7a du compresseur 7 étant connectée à la deuxième sortie S2,
- une deuxième branche B de circulation de fluide réfrigérant, reliant un point de raccordement R disposé sur la première branche de circulation A à la première entrée E1 du module de distribution 50.

Le condenseur 8 dissipe la chaleur de condensation du fluide réfrigérant dans un fluide caloporteur. Le fluide caloporteur peut être un flux d'air intérieur à un habitacle du véhicule. Le fluide caloporteur peut aussi être un liquide caloporteur circulant dans un circuit de liquide caloporteur. Le circuit de liquide caloporteur peut comprendre un échangeur de chaleur configuré pour échanger de la chaleur avec un flux d'air intérieur Fi à un habitacle du véhicule.

Selon l'exemple illustré du système de conditionnement thermique 100 :
- le premier échangeur 1 est configuré pour être couplé thermiquement avec un élément 70 d'une chaine de traction électrique d'un véhicule automobile,
- le deuxième échangeur de chaleur 2 est configuré pour échanger de la chaleur avec un flux d'air intérieur Fi à un habitacle du véhicule,
- le troisième échangeur de chaleur 3 est configuré pour échanger de la chaleur avec un flux d'air intérieur Fi à un habitacle du véhicule.

Le module de fluide réfrigérant 50 est ainsi intégré à un système de conditionnement thermique 100 pouvant fonctionner en mode refroidissement de l'habitacle d'un véhicule, en mode pompe à chaleur ou en mode déshumidification de l'habitacle, tout en assurant un conditionnement thermique d'un élément de la chaine de traction du véhicule. L'essentiel des composants nécessaires est intégré au module 50, ce qui permet une intégration compacte du système de conditionnement thermique.

L'élément 70 de la chaine de traction électrique peut comprendre une batterie de stockage d'énergie électrique.
L'élément 70 de la chaine de traction électrique peut comprendre un module électronique de pilotage d'un moteur électrique de traction du véhicule.

La première branche de circulation A de fluide réfrigérant comprend un dispositif d'accumulation de fluide réfrigérant 9 disposé entre le condenseur 8 et le point de raccordement R.
Le dispositif d'accumulation de fluide réfrigérant 9 est une bouteille déshydratante.

En variante, le système de conditionnement thermique 100 peut comporter un accumulateur de fluide réfrigérant disposé entre la deuxième sortie S2 et l'entrée 7a du compresseur.

Le système de conditionnement thermique 100 pour véhicule automobile, schématisé sur la figure 2, comprend :
- un premier échangeur de chaleur 1 configuré pour fonctionner en évaporateur,
- un deuxième échangeur de chaleur 2 configuré pour fonctionner en évaporateur,
- un troisième échangeur de chaleur 3 configuré pour fonctionner sélectivement en évaporateur ou en condenseur,
- une branche de circulation A de fluide réfrigérant comprenant successivement selon un sens de circulation du fluide réfrigérant :
   -- un compresseur 7 comprenant au moins une entrée 7a et une sortie 7b,
   -- un condenseur 8,
   -- un dispositif d'accumulation de fluide réfrigérant 9,
   - un module de distribution 50 de fluide réfrigérant tel que décrit précédemment, comprenant un troisième détendeur 33 disposé sur le septième canal 17, dans lequel :
      une entrée 1a du premier échangeur 1 est connectée à la troisième sortie S3,
      une sortie 1b du premier échangeur 1 est connectée à la troisième entrée E3,
      une entrée 2a du deuxième échangeur 2 est connectée à la première sortie S1,
      une sortie 2b du deuxième échangeur 2 est connectée à la deuxième entrée E2,
      une entrée 3a du troisième échangeur 3 est connectée à la quatrième sortie S4,
      une sortie 3b du troisième échangeur 3 est connectée à la quatrième entrée E4,
      l'entrée 7a du compresseur 7 est connectée à la deuxième sortie S2, et
      la sortie du dispositif d'accumulation de fluide réfrigérant 9 est connectée à la première entrée E1.

Selon ce mode de réalisation, le nombre de composants du système de conditionnement thermique 100 ne faisant pas partie du module 50 de distribution de fluide réfrigérant est encore réduit.

Le système de conditionnement thermique 100 décrit peut fonctionner selon de nombreux modes de fonctionnement, en fonction de la manière dont sont contrôlés les deux vannes d'arrêt 5, 6 ainsi que les deux détendeurs 31, 32.

Le système de conditionnement thermique 100 peut fonctionner sélectivement selon divers modes de fonctionnement, comme notamment un mode pompe à chaleur, un mode refroidissement de l'habitacle, et un mode refroidissement de la chaine de traction.

Dans le mode pompe à chaleur, le fluide réfrigérant circule successivement dans le compresseur 7, le condenseur 8, le troisième détendeur 33 où il passe à basse pression, dans le troisième échangeur 3 où il s'évapore et reçoit de la chaleur du flux d'air extérieur Fe. Le fluide réfrigérant essentiellement gazeux rentre dans le module 50 par la quatrième entrée E4, ressort par la deuxième sortie S2 et rejoint l'entrée 7a du compresseur 7, ce qui boucle le cycle thermodynamique.

La chaleur de condensation dans l'échangeur 8 permet de chauffer l'habitacle.

Dans le mode refroidissement de l'habitacle, le fluide réfrigérant circule successivement dans le compresseur 7, le condenseur 8, le troisième détendeur 33 sans subir de détente, dans le troisième échangeur 3 où il se condense en cédant de la chaleur au flux d'air extérieur Fe. Le fluide réfrigérant essentiellement sous forme liquide entre dans le module 50 par la quatrième entrée E4, circule dans le sixième canal 16, dans une partie du filtre 30, dans le premier détendeur 31 où il passe à basse pression, et ressort du module par la première sortie S1. De la, le fluide réfrigérant est évaporé dans le deuxième échangeur 2, ce qui refroidit le flux d'air intérieur Fi. Le fluide réfrigérant provenant du deuxième échangeur 2 rentre dans le module 50 par la deuxième entrée E2, et circule dans le deuxième canal 12 jusqu'à la deuxième sortie S2. De là, le fluide réfrigérant rejoint l'entrée du compresseur, comme précédemment.

La chaleur de condensation du fluide réfrigérant est dissipée dans le condenseur 8 et dans le troisième échangeur 3. La chaleur d'évaporation du fluide réfrigérant est prélevée au flux d'air intérieur Fi au niveau du deuxième échangeur 2.

Dans le mode refroidissement de la chaine de traction, la circulation du fluide réfrigérant entre la sortie 7b du compresseur 7 et le filtre 30 est identique au mode précédent. Au niveau de la première zone de connexion C1, le fluide réfrigérant circule dans le troisième canal 13, puis dans le deuxième détendeur 32 où il passe à basse pression, dans le premier échangeur 1 où il s'évapore en absorbant de la chaleur, puis dans le quatrième canal 14, puisque la portion de deuxième canal 12 s'étendant entre la deuxième zone de connexion C2 et la troisième zone de connexion C3 et rejoint la deuxième sortie S2. De là, le fluide réfrigérant rejoint l'entrée du compresseur, comme précédemment.

## Revendications

1. Module de distribution (50) de fluide réfrigérant, comportant :
- un premier canal (11) de circulation de fluide réfrigérant, reliant une première entrée (E1) de fluide réfrigérant et une première sortie (S1) de fluide réfrigérant,
- un deuxième canal (12) de circulation reliant une deuxième entrée (E2) et une deuxième sortie (S2),
- un troisième canal (13) de circulation reliant une première zone de connexion (C1) disposée sur le premier canal (11) et une troisième sortie (S3),
le module de distribution (50) étant **caractérisé en ce qu'**il comporte :
- un quatrième canal (14) de circulation reliant une troisième entrée (E3) et une deuxième zone de connexion (C2) disposée sur le deuxième canal (12) entre la deuxième entre la deuxième entrée (E2) et la deuxième sortie (S2),
- un cinquième canal (15) de circulation reliant une quatrième entrée (E4) et une troisième zone de connexion (C3) disposée sur le deuxième canal (12) entre la deuxième zone de connexion (C2) et la deuxième sortie (S2),
- un sixième canal de circulation (16) reliant une quatrième zone de connexion (C4) disposée sur le cinquième canal (15) et une cinquième zone de connexion (C5) disposée sur le premier canal (11) entre la première entrée (E1) et la première zone de connexion (C1),
le sixième canal (16) comprenant une vanne unidirectionnelle (4) configurée pour autoriser une circulation de fluide réfrigérant de la quatrième zone de connexion (C4) vers la cinquième zone de connexion (C5) et configurée pour interdire une circulation de fluide réfrigérant de la cinquième zone de connexion (C5) vers la quatrième zone de connexion (C4),
dans lequel chaque canal de circulation de fluide réfrigérant (11, 12, 13, 14, 15, 16) est formé par un évidement interne d'un même bloc élémentaire (20).

2. Module de distribution (50) de fluide réfrigérant selon la revendication 1, comportant :
- un septième canal (17) de circulation reliant une quatrième sortie (S4) et une sixième zone de connexion (C6) disposée sur le premier canal (11) entre la cinquième zone de connexion (C5) et la première entrée (E1).

3. Module de distribution (50) de fluide réfrigérant selon la revendication 1 ou 2, dans lequel le premier canal (11) comprend un premier détendeur (31) disposé entre la première zone de connexion (C1) et la première sortie (S1),
et dans lequel le troisième canal (13) comprend un deuxième détendeur (32).

4. Module de distribution (50) de fluide réfrigérant selon l'une des revendications précédentes, dans lequel le premier canal (11) comprend une première vanne d'arrêt (5) disposée entre la première entrée (E1) et la cinquième zone de connexion (C5),
et dans lequel le cinquième canal (15) comprend une deuxième vanne d'arrêt (6) disposée entre la quatrième zone de connexion (C4) et la troisième zone de connexion (C3).

5. Module de distribution (50) de fluide réfrigérant selon l'une des revendications précédentes, dans lequel le bloc élémentaire (20) a sensiblement la forme d'un parallélépipède rectangle.

6. Module de distribution (50) de fluide réfrigérant selon l'une des revendications précédentes, dans lequel les canaux de circulation de fluide réfrigérant (11, 12, 13, 14, 15, 16) sont formées par une succession de portions cylindriques rectilignes en communication fluidique les unes avec les autres.

7. Module de distribution selon l'une des revendications précédentes, dans lequel chaque canal de circulation de fluide réfrigérant (11, 12, 13, 14, 15, 16) est formé par une succession de portions cylindriques coaxiales ou s'étendant selon des axes sécants.

8. Module de distribution selon l'une des revendications précédentes, dans lequel le premier canal (11) du bloc élémentaire (20) comprend un premier logement (21) de réception du premier détendeur (31),
le premier logement (21) étant cylindrique et s'étendant selon un axe (A21),
et dans lequel le premier canal (11) débouche dans le premier logement (21), l'axe du premier logement (21) étant non concourant avec l'axe du premier canal (11).

9. Module de distribution (50) de fluide réfrigérant selon l'une des revendications précédentes, dans lequel la deuxième entrée (E2) et la deuxième sortie (S2) sont disposées sur une première face (20_1) du bloc élémentaire (20),
dans lequel la troisième entrée (E3) et la troisième sortie (S3) sont disposées sur une deuxième face (20_2) du bloc élémentaire (20),
dans lequel la première sortie (S1) est disposée sur une troisième face (20_3) du bloc élémentaire (20),
et dans lequel la première face (20_1), la deuxième face (20_2) et la troisième face (20_3) sont perpendiculaires deux à deux.

10. Module de distribution (50) de fluide réfrigérant selon l'une des revendications précédentes, dans lequel un logement de réception (21) du premier détendeur (31) et un logement de réception (22) du deuxième détendeur (32) débouchent sur une même face du bloc élémentaire (20).

11. Module de distribution (50) de fluide réfrigérant selon l'une des revendications précédentes en combinaison avec la revendication 9, dans lequel le deuxième canal (12) comprend un capteur de pression (37) de fluide réfrigérant disposé entre la deuxième zone de connexion (C2) et la troisième zone de connexion (C3),
dans lequel le deuxième canal (12) comprend un capteur de température (38) de fluide réfrigérant disposé entre la troisième zone de connexion (C3) et la deuxième sortie (S2),
et dans lequel le capteur de pression (37) de fluide réfrigérant et le capteur de température (38) de fluide réfrigérant sont disposés sur une quatrième face (20_4) du bloc élémentaire (20), opposée à la troisième face (20_3).

12. Module de distribution (50) de fluide réfrigérant selon l'une des revendications précédentes, comprenant une bride d'interface (40) avec un premier échangeur de chaleur (1), la bride d'interface (40) comportant :
- un premier canal de transfert (41) reliant la troisième sortie (S3) du module (50) à une entrée (1a) de fluide réfrigérant du premier échangeur de chaleur (1),
- un deuxième canal de transfert (42) reliant une sortie (1b) du premier échangeur de chaleur (1) et la troisième entrée (E3) du module (50),
la bride d'interface (40) étant solidaire du bloc élémentaire (20) et du premier échangeur de chaleur (1).

13. Module de distribution (50) de fluide réfrigérant selon l'une des revendications précédentes, comprenant un premier échangeur de chaleur (1) disposé dans le prolongement du bloc élémentaire (20) du module de distribution de fluide réfrigérant.

14. Système de conditionnement thermique (100) pour véhicule automobile, comprenant :
- un premier échangeur de chaleur (1) configuré pour fonctionner en évaporateur,
- un deuxième échangeur de chaleur (2) configuré pour fonctionner en évaporateur,
- un module de distribution (50) de fluide réfrigérant selon l'une des revendications précédentes, dans lequel :
une entrée du premier échangeur (1) est connectée à la troisième sortie (S3),
une sortie du premier échangeur (1) est connectée à la troisième entrée (E3),
une entrée du deuxième échangeur (2) est connectée à la première sortie (S1),
une sortie du deuxième échangeur (2) est connectée à la deuxième entrée (E2),
- une première branche de circulation (A) de fluide réfrigérant, comprenant successivement selon un sens de circulation du fluide réfrigérant :
-- un compresseur (7) comprenant au moins une entrée (7a) et une sortie (7b),
-- un condenseur (8),
-- un troisième dispositif de détente (33),
-- un troisième échangeur de chaleur (3) configuré pour fonctionner sélectivement en évaporateur ou en condenseur,
une sortie du troisième échangeur (3) étant connectée à la quatrième entrée (E4) du module de distribution (50), et l'entrée (7a) du compresseur (7) étant connectée à la deuxième sortie (S2),
- une deuxième branche (B) de circulation de fluide réfrigérant, reliant un point de raccordement (R) disposé sur la première branche de circulation (A) à la première entrée (E1) du module de distribution (50).

15. Système de conditionnement thermique (100) selon la revendication précédente, dans lequel :
- le premier échangeur (1) est configuré pour être couplé thermiquement avec un élément (70) d'une chaine de traction électrique d'un véhicule automobile,
- le deuxième échangeur de chaleur (2) est configuré pour échanger de la chaleur avec un flux d'air intérieur (Fi) à un habitacle du véhicule,
- le troisième échangeur de chaleur (3) est configuré pour échanger de la chaleur avec un flux d'air intérieur (Fi) à un habitacle du véhicule.

## Patentansprüche

1. Verteilermodul (50) für ein Kühlmedium, umfassend:
- einen ersten Kältemittelströmungskanal (11) , der einen ersten Kältemitteleinlass (E1) und einen ersten Kältemittelauslass (S1) verbindet, ,
- einen zweiten Durchflusskanal (12), der einen zweiten Einlass (E2) und einen zweiten Auslass (S2) verbindet,
- einen dritten Strömungskanal (13), der einen am ersten Kanal (11) angeordneten ersten Anschlussbereich (C1) mit einem dritten Auslass (S3) verbindet,
wobei das Verteilermodul (50) **dadurch gekennzeichnet ist, dass** es umfasst:
- einen vierten Strömungskanal (14), der einen dritten Einlass (E3) und einen zweiten Anschlussbereich (C2) verbindet, der am zweiten Kanal (12) zwischen dem zweiten Einlass (E2) und dem zweiten Auslass (S2) angeordnet ist,
- einen fünften Strömungskanal (15), der einen vierten Einlass (E4) mit einem dritten Anschlussbereich (C3) verbindet, der am zweiten Kanal (12) zwischen dem zweiten Anschlussbereich (C2) und dem zweiten Auslass (S2) angeordnet ist,
- einen sechsten Strömungskanal (16), der einen vierten Anschlussbereich (C4), der am fünften Kanal (15) angeordnet ist, mit einem fünften Anschlussbereich (C5) verbindet, der am ersten Kanal (11) zwischen dem ersten Einlass (E1) und dem ersten Anschlussbereich (C1) angeordnet ist,
wobei der sechste Kanal (16) ein Einwegventil (4) umfasst, das so ausgelegt ist, dass es einen Kühlmittelstrom von der vierten Anschlusszone (C4) zur fünften Anschlusszone (C5) zulässt und einen Kühlmittelstrom von der fünften Anschlusszone (C5) zur vierten Anschlusszone (C4) verhindert,
wobei jeder Kühlmittel-Strömungskanal (11, 12, 13, 14, 15, 16) durch eine innere Ausnehmung desselben Elementblocks (20) gebildet ist.

2. Kühlmittelverteilermodul (50) nach Anspruch 1, umfassend:
- einen siebten Zirkulationskanal (17), der einen vierten Ausgang (S4) und einen sechsten Anschlussbereich (C6) verbindet, der am ersten Kanal (11) zwischen dem fünften Anschlussbereich (C5) und dem ersten Eingang (E1) angeordnet ist.

3. Kältemittelverteilermodul (50) nach Anspruch 1 oder 2, wobei der erste Kanal (11) ein erstes Expansionsventil (31) umfasst, das zwischen dem ersten Anschlussbereich (C1) und dem ersten Auslass (S1) angeordnet ist,
und wobei der dritte Kanal (13) ein zweites Expansionsventil (32) umfasst.

4. Verteilermodul (50) für ein Kühlmedium gemäß einem der vorstehenden Ansprüche, wobei der erste Kanal (11) ein erstes Absperrventil (5) umfasst, das zwischen dem ersten Einlass (E1) und dem fünften Anschlussbereich (C5) angeordnet ist,
und wobei der fünfte Kanal (15) ein zweites Absperrventil (6) umfasst, das zwischen dem vierten Anschlussbereich (C4) und dem dritten Anschlussbereich (C3) angeordnet ist.

5. Kältemittelverteilermodul (50) gemäß einem der vorstehenden Ansprüche, wobei der Elementarblock (20) im Wesentlichen die Form eines rechteckigen Parallelepipeds aufweist.

6. Kühlmittelverteilermodul (50) nach einem der vorstehenden Ansprüche, wobei die Kühlmittelströmungskanäle (11, 12, 13, 14, 15, 16) durch eine Abfolge geradliniger zylindrischer Abschnitte gebildet sind, die miteinander in Fluidverbindung stehen.

7. Verteilermodul nach einem der vorstehenden Ansprüche, wobei jeder Kühlmittelkanal (11, 12, 13, 14, 15, 16) durch eine Abfolge von zylindrischen Abschnitten gebildet ist, die koaxial sind oder sich entlang sich schneidender Achsen erstrecken.

8. Verteilermodul nach einem der vorstehenden Ansprüche, wobei der erste Kanal (11) des Elementarblocks (20) eine erste Aufnahme (21) für das erste Expansionsventil (31) umfasst, wobei die erste Aufnahme (21) zylindrisch ist und sich entlang einer Achse (A21) erstreckt, und bei dem der erste Kanal (11) in die erste Aufnahme (21) mündet, wobei die Achse der ersten Aufnahme (21) nicht mit der Achse des ersten Kanals (11) zusammenfällt.

9. Kältemittelverteilermodul (50) gemäß einem der vorstehenden Ansprüche, wobei der zweite Einlass (E2) und der zweite Auslass (S2) an einer ersten Seite (20_1) des Elementarblocks (20) angeordnet sind,
wobei der dritte Einlass (E3) und der dritte Auslass (S3) an einer zweiten Seite (20_2) des Elementblocks (20) angeordnet sind,
wobei der erste Auslass (S1) an einer dritten Seite (20_3) des Elementblocks (20) angeordnet ist,
und wobei die erste Seite (20_1), die zweite Seite (20_2) und die dritte Seite (20_3) jeweils senkrecht zueinander stehen.

10. Kühlmittelverteilermodul (50) gemäß einem der vorstehenden Ansprüche, wobei eine Aufnahme (21) für das erste Expansions (31) und eine Aufnahme (22) für das zweite Expansions (32) auf derselben Seite des Elementblocks (20) münden.

11. Kältemittelverteilermodul (50) gemäß einem der vorstehenden Ansprüche in Kombination mit Anspruch 9, wobei der zweite Kanal (12) einen Kältemitteldrucksensor (37) umfasst, der zwischen dem zweiten Anschlussbereich (C2) und dem dritten Anschlussbereich (C3) angeordnet ist,
wobei der zweite Kanal (12) einen Kältemitteltemperatursensor (38) umfasst, der zwischen dem dritten Anschlussbereich (C3) und dem zweiten Auslass (S2) angeordnet ist,
und wobei der Kältemitteldrucksensor (37) und der Kältemitteltemperatursensor (38) an einer vierten Seite (20_4) des Elementblocks (20) angeordnet sind, die der dritten Seite (20_3) gegenüberliegt.

12. Kühlmittelverteilermodul (50) gemäß einem der vorstehenden Ansprüche, umfassend einen Schnittstellenflansch (40) zu einem ersten Wärmetauscher (1), wobei der Schnittstellenflansch (40) umfasst:
- einen ersten Übertragungskanal (41), der den dritten Ausgang (S3) des Moduls (50) mit einem Kältemitteleinlass (1a) des ersten Wärmetauschers (1) verbindet,
- einen zweiten Übertragungskanal (42), der einen Ausgang (1b) des ersten Wärmetauschers (1) mit dem dritten Eingang (E3) des Moduls (50) verbindet,
wobei der Schnittstellenflansch (40) fest mit dem Elementarblock (20) und dem ersten Wärmetauscher (1) verbunden ist.

13. Kühlmittelverteilermodul (50) gemäß einem der vorstehenden Ansprüche, umfassend einen ersten Wärmetauscher (1), der in der Verlängerung des Elementarblocks (20) des Kühlmittelverteilermoduls angeordnet ist.

14. Klimaanlage (100) für ein Kraftfahrzeug, umfassend:
- einen ersten Wärmetauscher (1), der für den Betrieb als Verdampfer ausgelegt ist,
- einen zweiten Wärmetauscher (2), der für den Betrieb als Verdampfer ausgelegt ist,
- ein Verteilermodul (50) für Kältemittel gemäß einem der vorstehenden Ansprüche, wobei:
ein Einlass des ersten Wärmetauschers (1) mit dem dritten Auslass (S3) verbunden ist,
ein Ausgang des ersten Wärmetauschers (1) mit dem dritten Eingang (E3) verbunden ist,
ein Einlass des zweiten Wärmetauschers (2) mit dem ersten Auslass (S1) verbunden ist,
ein Ausgang des zweiten Wärmetauschers (2) mit dem zweiten Eingang (E2) verbunden ist,
- einen ersten Zirkulationszweig (A) für das Kältemittel, der in Strömungsrichtung des Kältemittels nacheinander folgende Elemente umfasst :
-- einen Kompressor (7) mit mindestens einem Einlass (7a) und einem Auslass (7b),
-- einen Kondensator (8),
-- eine dritte Expansionsvorrichtung (33),
-- einen dritten Wärmetauscher (3), der so ausgelegt ist, dass er wahlweise als Verdampfer oder als Kondensator betrieben werden kann,
wobei ein Ausgang des dritten Wärmetauschers (3) mit dem vierten Einlass (E4) des Verteilermoduls (50) verbunden ist und der Einlass (7a) des Kompressors (7) mit dem zweiten Ausgang (S2) verbunden ist,
- einen zweiten Kühlmittelkreislaufzweig (B), der einen am ersten Kühlmittelkreislaufzweig (A) angeordneten Anschlusspunkt (R) mit dem ersten Einlass (E1) des Verteilermoduls (50) verbindet.

15. Klimatisierungssystem (100) nach dem vorstehenden Anspruch, wobei:
- der erste Wärmetauscher (1) so ausgelegt ist, dass er thermisch mit einem Element (70) eines elektrischen Antriebsstrangs eines Kraftfahrzeugs gekoppelt ist,
- der zweite Wärmetauscher (2) so ausgelegt ist, dass er Wärme mit einem Innenluftstrom (Fi) im Fahrgastraum des Fahrzeugs austauscht,
- der dritte Wärmetauscher (3) so ausgelegt ist, dass er Wärme mit einem Innenluftstrom (Fi) im Fahrgastraum des Fahrzeugs austauscht.

## Claims

1. A refrigerant distribution module (50), comprising:
- a first refrigerant circulation channel (11), connecting a first refrigerant inlet (E1) and a first refrigerant outlet (S1),
- a second circulation channel (12) connecting a second inlet (E2) and a second outlet (S2),
- a third circulation channel (13) connecting a first connection zone (C1) arranged on the first channel (11) and a third outlet (S3),
the refrigerant distribution module (50) being **characterised in that** it comprises :
- a fourth circulation channel (14) connecting a third inlet (E3) and a second connection zone (C2) arranged on the second channel (12) between the second inlet (E2) and the second outlet (S2),
- a fifth circulation channel (15) connecting a fourth inlet (E4) and a third connection zone (C3) arranged on the second channel (12) between the second connection zone (C2) and the second outlet (S2),
- a sixth circulation channel (16) connecting a fourth connection zone (C4) arranged on the fifth channel (15) and a fifth connection zone (C5) arranged on the first channel (11) between the first inlet (E1) and the first connection zone (C1),
the sixth channel (16) comprising a one-way valve (4) configured to allow circulation of refrigerant from the fourth connection zone (C4) to the fifth connection zone (C5) and
configured to prevent circulation of refrigerant from the fifth connection zone (C5) to the fourth connection zone (C4),
wherein each refrigerant circulation channel (11, 12, 13, 14, 15, 16) is formed by an internal recess of the same basic block (20).

2. The refrigerant distribution module (50) as claimed in claim 1, comprising:
- a seventh circulation channel (17) connecting a fourth outlet (S4) and a sixth connection zone (C6) arranged on the first channel (11) between the fifth connection zone (C5) and the first inlet (E1).

3. The refrigerant distribution module (50) as claimed in claim 1 or 2, wherein the first channel (11) comprises a first expansion valve (31) arranged between the first connection zone (C1) and the first outlet (S1),
and wherein the third channel (13) comprises a second expansion valve (32).

4. The refrigerant distribution module (50) as claimed in one of the preceding claims, wherein the first channel (11) comprises a first shut-off valve (5) arranged between the first inlet (E1) and the fifth connection zone (C5),
and wherein the fifth channel (15) comprises a second shut-off valve (6) arranged between the fourth connection zone (C4) and the third connection zone (C3).

5. The refrigerant distribution module (50) as claimed in one of the preceding claims, wherein the basic block (20) has substantially the shape of a rectangular parallelepiped.

6. The refrigerant distribution module (50) as claimed in one of the preceding claims, wherein the refrigerant circulation channels (11, 12, 13, 14, 15, 16) are formed by a succession of straight cylindrical portions in fluidic communication with one another.

7. The distribution module as claimed in one of the preceding claims, wherein each refrigerant circulation channel (11, 12, 13, 14, 15, 16) is formed by a succession of coaxial cylindrical portions or cylindrical portions extending along intersecting axes.

8. The distribution module as claimed in one of the preceding claims, wherein the first channel (11) of the basic block (20) comprises a first housing (21) for receiving the first expansion valve (31),
the first housing (21) being cylindrical and extending along an axis (A21),
and wherein the first channel (11) opens into the first housing (21), the axis of the first housing (21) not being concurrent with the axis of the first channel (11).

9. The refrigerant distribution module (50) as claimed in one of the preceding claims, wherein the second inlet (E2) and the second outlet (S2) are arranged on a first face (20_1) of the basic block (20),
wherein the third inlet (E3) and the third outlet (S3) are arranged on a second face (20_2) of the basic block (20),
wherein the first outlet (S1) is arranged on a third face (20_3) of the basic block (20),
and wherein the first face (20_1), the second face (20_2) and the third face (20_3) are perpendicular in pairs.

10. The refrigerant distribution module (50) as claimed in one of the preceding claims, wherein a housing for receiving (21) the first expansion valve (31) and a housing for receiving (22) the second expansion valve (32) open onto the same face of the basic block (20).

11. The refrigerant distribution module (50) as claimed in one of the preceding claims in conjunction with claim 9, wherein the second channel (12) comprises a refrigerant pressure sensor (37) arranged between the second connection zone (C2) and the third connection zone (C3),
wherein the second channel (12) comprises a refrigerant temperature sensor (38) arranged between the third connection zone (C3) and the second outlet (S2),
and wherein the refrigerant pressure sensor (37) and the refrigerant temperature sensor (38) are arranged on a fourth face (20_4) of the basic block (20), opposite the third face (20_3).

12. The refrigerant distribution module (50) as claimed in one of the preceding claims, comprising an interface flange (40) forming an interface with a first heat exchanger (1), the interface flange (40) comprising:
- a first transfer channel (41) connecting the third outlet (S3) of the module (50) to a refrigerant inlet (1a) of the first heat exchanger (1),
- a second transfer channel (42) connecting an outlet (1b) of the first heat exchanger (1) and the third inlet (E3) of the module (50),
the interface flange (40) being rigidly secured to the basic block (20) and the first heat exchanger (1).

13. The refrigerant distribution module (50) as claimed in one of the preceding claims, comprising a first heat exchanger (1) arranged in the extension of the basic block (20) of the refrigerant distribution module.

14. A thermal conditioning system (100) for a motor vehicle, comprising:
- a first heat exchanger (1) configured to operate as an evaporator,
- a second heat exchanger (2) configured to operate as an evaporator,
- a refrigerant distribution module (50) as claimed in one of the preceding claims, in which:
an inlet of the first exchanger (1) is connected to the third outlet (S3),
an outlet of the first exchanger (1) is connected to the third inlet (E3),
an inlet of the second exchanger (2) is connected to the first outlet (S1),
an outlet of the second exchanger (2) is connected to the second inlet (E2),
- a first refrigerant circulation branch (A) comprising, successively in a direction of circulation of the refrigerant:
-- a compressor (7) comprising at least one inlet (7a) and one outlet (7b),
-- a condenser (8),
-- a third expansion device (33),
-- a third heat exchanger (3) configured to operate selectively as an evaporator or as a condenser,
an outlet of the third exchanger (3) being connected to the fourth inlet (E4) of the distribution module (50), and the inlet (7a) of the compressor (7) being connected to the second outlet (S2),
- a second refrigerant circulation branch (B), connecting a junction point (R) arranged on the first circulation branch (A) to the first inlet (E1) of the distribution module (50).

15. The thermal conditioning system (100) as claimed in the preceding claim, wherein:
- the first exchanger (1) is configured to be thermally coupled to an element (70) of an electric powertrain of a motor vehicle,
- the second heat exchanger (2) is configured to exchange heat with an internal air stream (Fi) inside a vehicle interior,
- the third heat exchanger (3) is configured to exchange heat with an internal air stream (Fi) inside a vehicle interior.
